# EUROPEAN PATENT SPECIFICATION

(11) **EP 1 552 181 B1**
(45) Date of publication and mention of the grant of the patent: **03.06.2009**
(21) Application number: 03791511.3
(22) Date of filing: 05.08.2003
(51) Int. Cl.: F16D 66/00, B60T 10/00

(54) **METHOD FOR DISTRIBUTING BRAKE TORQUE IN A MOTOR VEHICLE**
VERFAHREN ZUM VERTEILEN VON BREMSDREHMOMENT IN EINEM KRAFTFAHRZEUG
PROCEDE PERMETTANT DE REPARTIR LE COUPLE DE FREINAGE DANS UN VEHICULE A MOTEUR

(30) Priority: 30.08.2002 SE 0202574
(43) Date of publication of application: 13.07.2005
(73) Proprietor: VOLVO LASTVAGNAR AB, 405 08 Göteborg (SE)
(72) Inventor: LINGMAN, Peter, S-416 54 Göteborg (SE)
(74) Representative: Fröhling, Werner Otto
(86) International application number: PCT/SE2003/001251
(87) International publication number: WO 2004/020865

(56) References cited:
- DE-A1- 19 843 580
- US-A- 6 062 658

## Description

### TECHNICAL FIELD:

The present invention relates to a method and an apparatus for distributing the brake torque between service brakes and auxiliary brakes in a vehicle.

### BACKGROUND OF THE INVENTION:

Arranging auxiliary brakes on a vehicle as a complement to the vehicle service brakes is already known. Auxiliary brakes are mainly used on heavier vehicles with the primary aim of saving the vehicle service brakes, especially in driving on long downhill gradients when seeking to brake in order to maintain a fairly constant speed. Use of the auxiliary brakes can serve to prevent the service brakes fading, so that they can deliver maximum brake force when the vehicle really needs to slow down very rapidly. The service brakes have a much stronger braking action than auxiliary brakes, partially due to the fact that the service brakes are normally arranged on all wheels of the vehicle. The auxiliary brakes normally act only on the drive wheels.

Distinguishing between so-called primary and secondary auxiliary brakes in a vehicle is also known. The terms primary and secondary refer to the location of the auxiliary brake before or after the vehicle main gearbox. Examples of primary auxiliary brakes are ISG (Integrated Starter & Generator) and retarders. A retarder is usually of the hydrodynamic retarder or electrodynamic retarder type. These are arranged between the engine and the main gearbox. A primary auxiliary brake may also consist of various types of engine brakes, such as a compressed-air brake, exhaust brake or the basic friction of the engine. The braking energy of a compressed-air brake and an exhaust brake is largely converted into heat, which is to a large extent dissipated via the engine cooling system, although it must be noted that a substantial proportion (approximately 40% of the braking energy) goes with the vehicle exhaust gases out through the exhaust system. The basic friction of the engine can be regulated by injecting a certain quantity of fuel into the engine so that the engine output torque become, for example, zero. Another possibility here is to decouple the engine from the rest of the drivetrain by means of a clutch between the engine and the gearbox. The term drivetrain is here and hereinafter taken to mean the vehicle engine together with transmission components coupled to the engine and extending right out to the drive wheels. Other controllable units coupled to the engine that affect the braking force from the engine, include, for example, the engine cooling fan, the vehicle air-conditioning system, superchargers and other auxiliary units coupled to the engine.

A secondary auxiliary brake, which is arranged somewhere after the vehicle main gearbox, usually consists of a hydrodynamic or electrodynamic retarder.

An auxiliary brake of the hydrodynamic retarder type usually comprises a pump impeller (rotor) and a turbine wheel (stator). The rotor is firmly coupled to the vehicle propshaft, for example, and rotates with the latter. The stator is fixed in a retarder housing in which both the rotor and the stator are enclosed. The retarder housing is connected to an oil reservoir. When oil is forced into the retarder housing, it is set in motion by the rotor, which presses the oil against the stator. Since the stator cannot rotate a retardation of the oil flow occurs. This results in a braking of the rotor and of the vehicle as a whole. The brake torque is adjusted by the quantity of oil in the retarder housing. The heat generated when the oil slows the rotor is generally dissipated via a heat exchanger, which is coupled to the engine cooling system. This means that the retarder requires more cooling capacity from the engine cooling system compared, for example, to the aforementioned compressed-air or exhaust brake in which a large proportion of the braking energy disappears directly out through the exhaust pipe. The maximum braking capacity of a retarder can generally be utilized only for shorter periods of time, since the capacity of the cooling system is insufficient.

An auxiliary brake of the electrodynamic retarder type usually comprises a stator in the form of electromagnets and a rotor in the form of soft iron disks. The rotor is coupled to the vehicle propshaft, for example, and the stator is fixed to the vehicle. When current is applied to the electromagnets a brake torque is produced on the rotor when it rotates. The braking energy is converted into heat due to the eddy currents, which are formed in the soft iron disks. In prolonged braking the rotor is heated up to such an extent that the formation of eddy currents is reduced, since the magnetic characteristics of the soft iron disks vary as a function of the temperature, which leads to a reduction in the braking capacity. In prolonged application making maximum use of the capacity of the retarder, the braking capacity may in theory even disappear altogether. The electrodynamic retarder is usually cooled by ambient air.

Where a vehicle is equipped with powerful auxiliary brakes, for example both primary and secondary auxiliary brakes or multiple brakes of the primary type alone, there is a serious risk that the total brake force will be so great that in certain situations some of the transmission components are exposed to stresses that exceed their maximum torque capacity. A method of controlling the auxiliary brake torque so that the drivetrain is not damaged is described in a parallel application.

Furthermore, there is a serious risk that friction of the drive wheels against the road surface will be insufficient to transmit all the brake torque to the road surface without the wheels slipping. This may result both in a longer braking distance for the vehicle and also in abnormal tire wear in which parts of the tires may be worn smooth. Even when the friction of the drive wheels against the road surface is sufficient to transmit the full brake torque to the road surface, this may result in unnecessarily severe tire wear on the drive wheels when strong retardation is required.

US5921883 describes a method in which the brake torque from a compressed-air brake is controlled as a function of the vehicle speed or the gear engaged, with the aim of not exceeding the torque capacity of a transmission component. This method does not take into account whether the brake force from the auxiliary brake is becoming too great for the friction between the road surface and the drive wheels, that is to say whether the vehicle is beginning to skid.

One common situation is when a driver attempts to make maximum possible use of the auxiliary brakes, partly in order to spare the brake linings and partly in order to prevent the service brakes fading. By means of the engine speed, road speed and coolant temperature, and by watching the gradient of the slope an experienced driver can use an auxiliary brake to maintain a relatively high speed on a downhill gradient without the vehicle cooling system overheating. This gives a relatively high road speed but with relatively high tire wear on the drive wheels. Research has shown that with an optimum distribution between the brake torque on the auxiliary brake and the service brake, the road speed can be increased by between 10% and 30%. This research only takes account of the maximum speed. Since the service brakes are also used in this case, the wear on the drive wheels is reduced but the wear on the service brakes increases significantly.

The wear sustained by those components of the vehicle that are consumed during retardation of the vehicle constitutes one of the largest routine service costs for a vehicle. These components are primarily tires, brake linings and brake disks/brake drums, but also include the oil in a hydrodynamic retarder, for example.

US-A-6 062 658 discloses a method for distributing brake torque between at least a first and a second brake system of a motor vehicle. During light braking, priority can be given to uniform reduction of lining wear with consideration of the braking action of a retarder at all axles. In the case of heavy braking, priority can be given to the distribution of the braking force, with the braking action of the retarder being taken into consideration only art the axle on which the retarder acts, which is usually the rear axle. A controller receives operating variables of the brakes such as wheel speeds, brake lining wear values, etc.

### SUMMARY OF THE INVENTION:

The object of the invention is to provide a method for distributing brake torque between first and a second brake system, such as between service brakes and auxiliary brakes, in a vehicle, which method can increase the service life of wearing components and/or reduce the service cost associated with wearing components.

The object is achieved by a method according to claim 1. The other claims contain advantageous developments and further developments of the method according to the invention.

By means of the method according to the invention the brake torque is therefore distributed between service brakes and auxiliary brakes of a motor vehicle in that account is taken of the wear of the tires and the constituent components of the brake system. The advantage of this method is that the distribution of wear to tires, brake linings and brake disks/brake drums can be selected according to various situations. Thus the distribution of wear can be optimized in relation to total physical wear, that is to say the constituent wearing components may be given a maximum service life. The wear distribution may also be optimized in relation to the service cost for wearing components, that is to say in order to minimize the total service cost.

### BRIEF DESCRIPTION OF THE DRAWINGS

The invention will be described in more detail below with reference to examples of embodiments shown in the drawings attached, of which
- FIG 1: shows a Schematic representation of a vehicle having brake systems according to the invention,
- FIG 2: shows a diagram illustrating the correlation between brake torque distribution, road gradient and cost.

### DESCRIPTION OF PREFERRED EMBODIMENTS

The examples of embodiments of the invention described below are to be regarded only as examples and should in no way limit the scope of the patent claims. In the examples of embodiment here described disk brakes are used as examples of service brakes. The examples of embodiment naturally also apply to drum brakes. Furthermore, the term wheel axle is not only used to denote a continuous, physical axle but also applies to wheels seated on a geometric axis, that is say where the wheels are independently suspended.

The term wear of the constituent components of the brake systems is also similarly used. These components comprise the components of the brake systems that are consumed when the vehicle is being retarded. These are primarily tires, brake linings and brake disks/brake drums, but the oil in a hydrodynamic retarder, for example, also represents a consumable component.

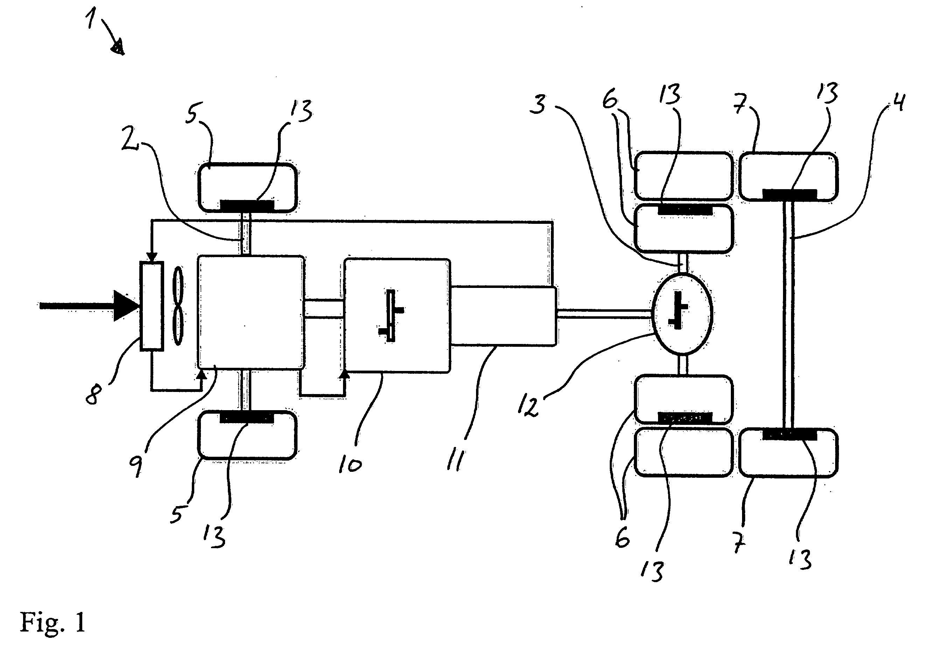

Fig. 1 shows a diagram of a vehicle 1 having a front wheel axle 2, a first rear wheel axle 3 and a second rear wheel axle 4. Fitted to the front wheel axle 2 is a pair of front wheels 5, which steer the vehicle. A first rear pair of wheels 6 is fitted to the first rear wheel axle 3, which is also the vehicle drive axle. The first pair of rear wheels 6 here comprises a so-called twin assembly, that is to say two wheels on each side of the drive axle. The second pair of rear wheels 7 is fitted to the second rear wheel axle 4, which is a lift-axle used for heavy loads. Each wheel comprises a tire fitted to a wheel rim.

Each side of a wheel axle is equipped with a service brake 13, here in the form of pneumatic disk brakes. The service brakes are electronically controlled by an electronic control unit (ECU) comprising, among other things, a computer (not shown). The service brakes may be individually controlled, for example in order to permit active stabilization control (ESP). The vehicle furthermore comprises a radiator 8, an engine 9 with an auxiliary brake in the form of a compressed=air brake (VEB), a gearbox 10, a hydraulic auxiliary brake in the form of a compact retarder 11 and a final drive 12. These components will be familiar to the person skilled in the art and will not be described in further detail.

A driver normally tries to use the auxiliary brakes as much as possible, especially on longer downhill gradients. A common driving strategy is to use the auxiliary brakes to maintain a constant vehicle speed and to use the service brakes only in order to achieve the speed at which the auxiliary brakes are capable of maintaining a constant speed. The reason for this is partly that the driver does not want to cause wear of the brake disks and brake linings, and partly that the driver does not know how hot the service brakes are and therefore wants to be on the safe side with regard to hot fading, that is to say a decrease in the braking capacity of the service brakes at increased temperature. The result of this strategy is that all the brake torque braking the vehicle must be absorbed by the wheels /tires on the drive axle, which in turn leads to a disproportionately high increase in wear on these tires.

The tire wear is not a linear function but is strongly dependent on the brake torque. Depending on the road gradient, the tire temperature and the vehicle speed and weight, for example, the tires on the drive axle may therefore be subject to an abnormal degree of wear when only the auxiliary brakes are used to brake the vehicle.

In order to reduce the tire wear on the drive wheels it is therefore advantageous to use both the auxiliary brakes and service brakes and to distribute the brake torque between these brake systems in some suitable way. The distribution of brake torque may be accomplished in various ways.

In a first example of an embodiment of the method according to the invention the brake torque is distributed between auxiliary brakes and service brakes in that account is taken of the wear of the components retarding the vehicle, that is to say tires, brake linings and brake disks. Since the wear of these components is not a linear function, the distribution is advantageously optimized so as to minimize the wear. In order to do this, information on the characteristics of the constituent components is stored in the vehicle's control unit. For a brake lining, for example, these characteristics may include wearing properties, thickness, heat resistance, etc. and for a tire they may include, for example, the rubber compound, tread depth, variation with temperature, etc. Using these characteristics the control unit can then calculate an optimum brake torque distribution as a function of the required brake torque. In this example of an embodiment the brake torque is optimized so that each constituent component is subject to as little wear as possible. Account can also be taken of the fact that the service brakes act on all the wheels whereas the auxiliary brakes only act on the drive axle. Through optimal minimization of the wear, therefore, the service brakes on the drive axle can be actuated with a lower brake force than the service brakes which act on dead axles.

The following is one possible example. Since a brake disk is subject to significantly less wear than a brake lining, the break disk wear can be disregarded in a wear model. It then remains to optimize the distribution of wear between brake linings and tires. The model may presuppose, for example, that the wear in millimeters on brake linings and tires is equal. From the characteristics stored, the required brake torque and other parameters such as road gradient, speed, vehicle weight, etc, the model can then calculate a suitable brake torque distribution between service brake and auxiliary brake. For a vehicle in a driving situation in which only the road gradient varies, the intervention of the service brake may vary from 0% for a slight road gradient to over 50% for a pronounced road gradient. In the model the various parameters can be weighted so that a desired optimization is obtained. Thus, for example, a different weighting is obtained for tire wear when the vehicle is equipped with twin wheel assembly on the drive axle compared to when the drive axle has single wheels.

In a second example of an embodiment of the method according to the invention the brake torque is distributed between auxiliary brakes and service brakes in that account is taken of the cost of the wear of the components retarding the vehicle, that is to say tires, brake linings and brake disks.

In many cases it is not the actual physical wear that is of most interest to a vehicle owner, for example, but the cost of this wear. This cost can be calculated in several ways and the cost may include several different parameters. For example, the cost of material, the labor cost, the cost of immobilized vehicles, the cost of driving to the workshops etc. may be included in the calculation model.

In a simplified model the total cost C_{comp} for a component may be a function of the material cost Cₘ, the labor cost C_{w}, the available wear δ remaining and the actual wear W. The cost for the various components is then added up in order to obtain a total wear cost Cₜₒₜ.

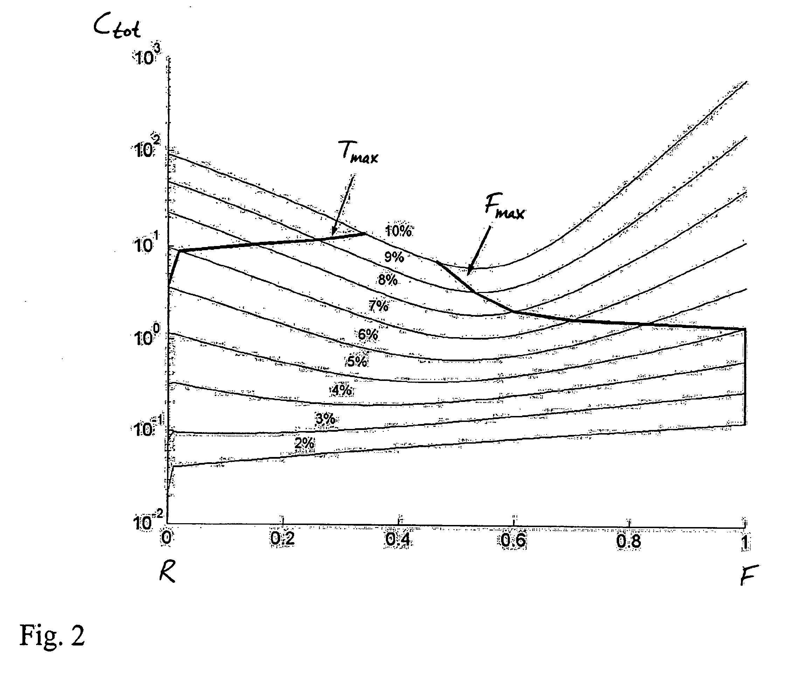

Fig. 2 shows how the optimum distribution of brake torque between auxiliary brake and service brake varies for different road gradients in a given driving situation with a specific vehicle combination. In this example the vehicle combination weights 60 tonnes, it has 6 axles, that is to say a truck having three axles and a trailer having three axles, and the vehicle combination travels 3000 m at a constant speed of 15 m/s.

The X-axis shows the brake torque distribution where 0 signifies only the auxiliary brake R and 1 signifies only the service brake F. The Y-axis shows the total cost Cₜₒₜ in Neuro. It can clearly be seen from Fig. 2 that the optimum brake torque distribution between auxiliary brake and service brake varies as a function of the road gradient. With a road gradient of 3%, an approximately 10% intervention of the service brake gives the lowest total cost, whilst a road gradient of 6% requires an approximately 50% intervention of the service brake in order to achieve the lowest total cost. Fig. 2 also shows the maximum limit for the auxiliary brake torque Tₘₐₓ based on the cooling capacity of the cooling system and the maximum limit for the service brake torque Fₘₐₓ based on the service brake hot fading.

In a, further development the distribution of brake torque between auxiliary brake and service brake is optimized in such a way that the vehicle speed is also included in the calculation model. This is done by also assigning a cost to a speed differential, for example a cost of 0.02 Euro may be assigned to a speed reduction of 2 km/h. In this case the vehicle speed may be reduced somewhat if the system finds that the reduction in speed is offset by a reduced wear cost. In the same way the vehicle speed may be increased somewhat if the system finds that an increase in speed does not increase the wear cost by more than the cost of the change in speed. The speed differential permitted may advantageously lie within an adjustable range equal, for example, to the predefined speed increment/speed reduction of the cruise control.

In a third example of an embodiment of the method according to the invention the brake torque is distributed between auxiliary brakes and service brakes in that account is taken of the service life of the components retarding the vehicle, that is to say tires, brake linings and brake disks.

In certain cases it is not the cost of the wear of the constituent components that is of most interest to a vehicle owner, for example, the greatest cost to a vehicle owner instead being the cost incurred when the vehicle is stationary, that is to say when the vehicle is standing in the workshop. The time spent in the workshop and the interval between visits to the workshop must be minimized. Especially unscheduled stoppages, that is to say workshop visits that have not been preplanned, must be minimized. In order not to have to change tires, brake disks or brake linings at times other than scheduled workshop visits, the calculation model for the distribution of brake torque between auxiliary brakes and service brakes can be optimized with regard to the service life of the components.

In this calculation model the wear of the constituent components is optimized as a function of the remaining mileage to the next workshop visit. The control unit in this example calculates how much wear a component has sustained since it was replaced and hence how much material remains. From the remaining mileage to the next workshop visit the control unit can calculate a brake torque distribution between auxiliary brakes and service brakes as a function of how much wearing material is left on the various components. If the control unit calculates, for example, that the tires on the drive axle need to be changed before the scheduled workshop visit, the intervention of the service brakes can be increased so that the wheels on the drive axles will manage until the scheduled workshop visit. The control unit can also calculate the distribution of wear on the constituent components and distribute the brake torque between the brake systems so that some components can be replaced at one workshop visit while some components can manage until the next workshop visit. Here it is also possible to distribute the brake torque between the axles on which the service brake acts. For example, the service brake can be made to act solely on the rear wheels whilst the auxiliary brake acts on the drive wheels when wear of the components of the front axle is to be avoided.

Another possibility is to distribute the brake torque so that all components need changing at the same time, that is to say so that all components become worn out at the same point in time. It may then be possible to schedule a workshop visit for this point in time so that unscheduled stoppages are avoided.

In these examples of embodiments a calculation model is used in order to optimize the brake torque distribution. One input parameter for this calculation model is the instantaneous road gradient. When the road gradient alters when driving on a downhill gradient, the control unit recalculates the brake torque distribution. The calculation model must then naturally include adequate safety margins so that the vehicle can at all times be braked to a standstill.

In a further development the entire actual gradient is used as input parameter. This can be done by using GPS in order to obtain the current position. With a map containing the road profile and road gradient the entire coming road gradient and road gradient variations can be used in order to determine an optimum brake torque distribution between the auxiliary brakes and the service brakes. Here too, a certain top speed can be permitted in order to minimize unnecessary braking.

In a first example of an embodiment of the apparatus according to the invention the apparatus comprises an electronic control unit (not shown), which sends control signals to the brake systems. Depending on the required brake torque, the brake torque is distributed between one or more auxiliary brakes acting on the drive axle and the service brakes acting on all wheel axles. The exact brake torque distribution between the auxiliary brake and the service brake depends on which optimization algorithm is used. In the first example of an embodiment the distribution is optimized so that the wear of the tires and the constituent wearing parts of the brake systems is minimized. In this way each component attains the longest possible service life.

In a second example of an embodiment of the apparatus according to the invention the distribution is optimized so that the cost of the wear of the tires and the constituent wearing components of the brake systems is minimized. In this way the servicing cost for the vehicle can be kept to the lowest possible level.

In order to optimize the distribution in a desired way the control unit receives various input signals from the vehicle. A number of different input parameters can be used depending on the optimization algorithm. These may be one or more of the following: vehicle speed, vehicle acceleration, required brake torque, instantaneous brake torque, instantaneous retarder torque, weight of the vehicle, axle load, road gradient, retarder temperature, coolant temperature, temperature of the brake linings/ brake disk/brake drum, ambient temperature and position of the vehicle. In the case of a vehicle combination comprising a tractor vehicle and a trailer vehicle, parameters specific to the trailer vehicle may also be used in the calculation algorithm. Also stored in the control unit memory are data on various wear parameters for the tires and the constituent wearing components of the brake systems.

The invention must not be regarded as being restricted to the examples of embodiments described above, a number of further variants and modifications being feasible within the scope of the following patent claims. For example, it is also possible to distribute the brake torque between a tractor vehicle and a trailer vehicle by taking into account the wear of the tires and the constituent components of the brake systems. This may be advantageous, for example, when the tractor vehicle and trailer vehicle have tires of different hardness and/or different brake linings.

## Claims

1. A method for distributing brake torque between at least a first and a second brake system (11, 13) of a motor vehicle (1) comprising at least two pairs of wheels (5, 6, 7) with tires, in which the first brake system (13) acts on at least one pair of wheels (5, 6, 7) and in which the second brake system (11) acts on at least one pair of driven wheels (5), the brake torque is distributed between the first and the second brake system (11, 13) on the basis of a wear model which takes account of the wear of the tires and the constituent components of the brake systems (11, 13) to optimize the distribution of wear between brake linings and tires, **characterized in that** account is taken of at least one of
- the servicing cost for the tires and the constituent components of the brake systems (11, 13);
- the service life of the tires and the constituent components of the brake systems (11, 13).

2. The method as claimed in claim 1, **characterized in that** the wear of the tires and the constituent components of the brake systems (11, 13) is minimized.

3. The method as claimed in claim 1 or 2, **characterized in that** the servicing cost for the tires and the constituent components of the brake systems (11, 13) is minimized.

4. The method as claimed in any one of claims 1 to 3, **characterized in that** the first brake system (13) is a service brake and that the second brake system (11) is an auxiliary brake.

5. The method as claimed in any one of claims 1 to 4, **characterized in that** the input parameters for the method are one or more of the following: vehicle speed, vehicle acceleration, required brake torque, instantaneous brake torque, instantaneous retarder torque, vehicle weight, axle load, road gradient, retarder temperature, coolant temperature, temperature of the brake linings/brake disk/brake drum, ambient temperature, vehicle position.

6. The method as claimed in any one of claims 1 to 5, **characterized in that** when a certain brake torque is required the auxiliary brake torque and the service brake torque are determined by comparing each brake torque with a predefined limit value for the maximum permitted wear of the tires and the brake linings and brake disks/brake drums whilst delivering the total brake torque required.

7. Computer program comprising program code for performing the method as claimed in any one of claims 1 to 6 when said program is executed by a computer.

8. Computer program product comprising program code stored on a computer-readable medium for performing the method as claimed in any one of claims 1 to 6 when said program is executed by a computer.

## Patentansprüche

1. Verfahren zur Verteilung eines Bremsmoments zwischen wenigstens einem ersten und einem zweiten Bremssystem (11, 13) eines Kraftfahrzeugs (1) mit wenigstens zwei Paaren von Rädern (5, 6, 7) mit Reifen, bei dem das erste Bremssystem (13) auf wenigstens ein Paar von Rädern (5, 6, 7) wirkt und bei dem das zweite Bremssystem (11) auf wenigstens ein Paar von angetriebenen Rädern (5) wirkt, das Bremsmoment zwischen dem ersten und zweiten Bremssystem (11, 13) auf der Basis eines Abnutzungsmodells verteilt wird, das die Abnutzung der Reifen und der Einzelkomponenten des Bremssystems (11, 13) berücksichtigt, um die Verteilung der Abnutzung zwischen den Bremsbelägen und den Reifen zu optimieren, **dadurch gekennzeichnet, dass** wenigstens eines berücksichtigt wird von
- den Wartungskosten für die Reifen und die Einzelkomponenten des Bremssystems (11, 13),
- der Lebensdauer der Reifen und der Einzelkomponenten des Bremssystems (11, 13).

2. Verfahren nach Anspruch 1, **dadurch gekennzeichnet, dass** die Abnutzung der Reifen und der Einzelkomponenten des Bremssystems (11, 13) minimiert wird.

3. Verfahren nach Anspruch 1 oder 2, **dadurch gekennzeichnet, dass** die Wartungskosten für die Reifen und die Einzelkomponenten des Bremssystems (11, 13) minimiert werden.

4. Verfahren nach einem der Ansprüche 1 bis 3, **dadurch gekennzeichnet, dass** das erste Bremssystem (13) eine Betriebsbremse ist und dass das zweite Bremssystem (11) eine Hilfsbremse ist.

5. Verfahren nach einem der Ansprüche 1 bis 4, **dadurch gekennzeichnet, dass** die Eingangsparameter für das Verfahren einer oder mehrere der folgenden sind: Fahrzeuggeschwindigkeit, Fahrzeugsbeschleunigung, erforderliches Bremsmoment, momentanes Bremsmoment, momentanes Verzögerungsmoment, Fahrzeuggewicht, Achslast, Straßenneigung, Verzögerertemperatur, Kühlmitteltemperatur, Temperatur der Bremsbeläge/Bremsscheibe/Bremstrommel, Umgebungstemperatur, Fahrzeugposition.

6. Verfahren nach einem der Ansprüche 1 bis 5, **dadurch gekennzeichnet, dass**, wenn ein bestimmtes Bremsmoment erforderlich ist, das Hilfsbremsmoment und das Betriebsbremsmoment bestimmt werden durch Vergleich jedes Bremsmoments mit einem vorherbestimmten Grenzwert für die maximal erlaubte Abnutzung der Reifen und der Bremsbeläge und Bremsscheiben/Bremstrommeln, während das erforderliche Gesamtbremsmoment geliefert wird.

7. Computerprogramm mit einem Programmcode zur Durchführung des Verfahrens nach einem der Ansprüche 1 bis 6, wenn das Programm durch einen Computer durchgeführt wird.

8. Computerprogrammerzeugnis mit einem auf einem Computer lesbaren Medium gespeicherten Programmcode zur Durchführung des Verfahrens nach einem der Ansprüche 1 bis 6, wenn das Programm durch einen Computer durchgeführt wird.

## Revendications

1. Procédé pour répartir un couple de freinage entre au moins des premier et second systèmes de freinage (11, 13) d'un véhicule à moteur (1) comprenant au moins deux paires de roues (5, 6, 7) munies de pneumatiques, dans lequel le premier système de freinage (13) agit sur au moins une paire de roues (5, 6, 7), et dans lequel le second système de freinage (11) agit sur au moins une paire de roues entraînées (5), le couple de freinage est réparti entre les premier et second systèmes de freinage (11, 13) sur la base d'un modèle d'usure qui prend en compte l'usure des pneumatiques et des composants constitutifs des systèmes de freinage (11, 13) pour optimiser la répartition d'usure entre les garnitures des freins et les pneumatiques, **caractérisé en ce qu'**est pris en compte au moins un élément parmi :
- le coût d'entretien pour les pneumatiques et les composants constitutifs des systèmes de frein (11, 13),
- la durée d'utilisation des pneumatiques et des composants constitutifs des systèmes de frein (11, 13).

2. Procédé selon la revendication 1, **caractérisé en ce que** l'usure des pneumatiques et des composants constitutifs des systèmes de frein (11, 13) est minimisée.

3. Procédé selon la revendication 1 ou 2, **caractérisé en ce que** le coût d'entretien pour les pneumatiques et les composants constitutifs des systèmes de frein (11, 13) est minimisé.

4. Procédé selon l'une quelconque des revendications 1 à 3, **caractérisé en ce que** le premier système de frein (13) est un frein de service, et **en ce que** le second système de frein (11) est un frein auxiliaire.

5. Procédé selon l'une quelconque des revendications 1 à 4, **caractérisé en ce que** les paramètres d'entrée pour le procédé sont un ou plusieurs des suivants : une vitesse du véhicule, une accélération du véhicule, un couple de freinage nécessaire, un couple de freinage instantané, un couple de ralentisseur instantané, le poids du véhicule, une charge par essieu, un gradient de route, une température de ralentisseur, une température d'agent de refroidissement, une température des garnitures de frein/d'un disque de frein/d'un tambour de frein, une température ambiante et une position du véhicule.

6. Procédé selon l'une quelconque des revendications 1 à 5, **caractérisé en ce que** lorsqu'un certain couple de freinage est demandé, le couple de frein auxiliaire et le couple de frein de service sont déterminés en comparant chaque couple de freinage avec une valeur limite prédéfinie pour l'usure admissible maximum des pneumatiques et des garnitures de frein et des disques de frein/tambours de frein, tout en délivrant le couple de freinage total demandé.

7. Programme informatique comprenant un code de programme pour mettre en oeuvre le procédé selon l'une quelconque des revendications 1 à 6 lorsque ledit programme est exécuté par un ordinateur.

8. Produit-programme informatique comprenant un code de programme mémorisé sur un support pouvant être lu par un ordinateur pour mettre en oeuvre le procédé selon l'une quelconque des revendications 1 à 6 lorsque ledit programme est exécuté par un ordinateur.
